# EUROPÄISCHE PATENTSCHRIFT

(11) **EP 1 311 609 B1**
(45) Veröffentlichungstag und Bekanntmachung des Hinweises auf die Patenterteilung: **29.07.2009**
(21) Anmeldenummer: 01971880.8
(22) Anmeldetag: 07.08.2001
(51) Int. Cl.: C08L 23/10, C08L 23/04

(54) **PEROXIDISCH VERNETZBARE ZUSAMMENSETZUNG**
PEROXIDICALLY CROSS-LINKABLE COMPOSITIONS
COMPOSITION POUVANT ETRE RETICULEE DE MANIERE PEROXYDIQUE

(30) Priorität: 26.08.2000 DE 10042084
(43) Veröffentlichungstag der Anmeldung: 21.05.2003
(73) Patentinhaber: REHAU AG + Co, 95111 Rehau (DE)
(72) Erfinder: STEFFL, Udo, 95111 Rehau (DE); RHÖNISCH, Thomas, 95111 Rehau (DE)
(86) Internationale Anmeldenummer: PCT/EP2001/009094
(87) Internationale Veröffentlichungsnummer: WO 2002/018488

(56) Entgegenhaltungen:
- EP-A- 0 428 153
- EP-A- 0 838 496
- US-A- 6 087 431

## Beschreibung

Die vorliegende Erfindung betrifft eine vernetzbare Zusammensetzung auf der Basis eines thermoplastischen Homo- oder Copolymers von Propylen, die zur Herstellung von Formteilen oder Halbzeug, wie Dichtungsprofilen und Möbelprofilen, oder Schläuchen geeignet ist.

Thermoplastische Elastomere auf Basis von Polyolefinkautschuk-Kunststoffpolyblends lassen sich in zwei Klassen einteilen:

Eine Klasse besteht aus einem einfachen Blend eines α-Olefinkautschuk in einem kristallinen Polyolefinkunststoff und wird als thermoplastisches Polyolefin (TPO) bezeichnet. In den meisten kommerziellen TPOs besteht die hartelastische Phase aus isotaktischem Polypropylen (ein Homo- oder Random- oder Blockcopolymer) mit einer kleinen Menge Ethylen als Comonomer. Als weichelastische Phasen dieser Blends kommen Ethylen-Propylen-Kautschuke oder Ethylen-Propylen-Dien-Kautschuke zum Einsatz. Ethylen-Propylen-Kautschuke enthalten 45 bis 85 Mol.-% Ethylen, 55 bis 15 Mol.-% Propylen und 0 bis 10 Mol.-% Dien.

Eine zweite Klasse besteht aus vernetzten Zusammensetzungen. Hierbei wird im Herstellungsprozess die Kautschukkomponente des TPO einer Vernetzung unterzogen, um ein thermoplastisches Elastomer mit kautschukartigen Eigenschaften zu erzeugen. Die am weitesten verbreiteten vernetzten thermoplastischen Elastomere leiten sich von (Ethylen-Propylen-Dienkautschuk)-Polypropylen-Systemen ab (Ullmann's Encyklopedia of Industrial Chemistry, Fifth, Completely Revised Edition, Volume A 26, Pages 634 -639).

Auch vernetzbare Zusammensetzungen auf der Basis von Polyethylen sind bereits bekannt. Beispielsweise wird in der US 4,267,080 eine Polymerzusammensetzung auf der Basis von Ethylen beschrieben, im wesentlichen bestehend aus:
a) einem Ethylenpolymer, welches mindestens 85 Gew.-% Ethylen enthält,
(b) 5 bis 50 % eines Elastomers, bezogen auf das Gewicht von (a),
(c) einem aliphatischen oder aromatischen (Di(tertbutyl)peroxid und
(d) 5 bis 500 %, bezogen auf das Gewicht von (c) mindestens eines Vernetzungshilfsstoffs, ausgewählt aus der Gruppe, bestehend aus 1,2-Polybutadien, Triallylcyanurat und Triallylisocyanurat.

In der DE-A-19801687 werden thermoplastische Elastomere guter Einfärbbarkeit und hoher Festigkeit und Elastizität beschrieben, deren eingelagerte Elastomerpartikel einen mittleren Partikeldurchmesser von 0,05 bis 5µm haben, und welche nach einem Verfahren gebildet werden, bei dem Mischungen aus Polypropylen-Homopolymeren und/oder Polypropylen-Copolymeren, Elastomeren C₄-C₁₂-Olefin-co und/oder -Terpolymeren und C₈-C₁₄-Dialcrylaten, C₇-C₁₆-Dialylverbindungen, C₉-C₁₅-Dimethacrylaten, C₇-C₁₀-Divinylverbinbungen , C₁₂-C₁₇-Acrylsäureestern von Polyalkoholen, C₁₅-C₂₁-Methacrylsäreestern von Polyalkoholen und/oder C₉-C₁₂-Trialylverbindungen in der Schmelze umgesetzt werden. Die thermoplastischen Elastomere sowie Mischungen der thermoplastischen Elastomere mit üblichen Polyolefinen sind beispielsweise zum Einsatz in der Fahrzeugindustrie, in der Haushaltsgeräteindustrie, auf dem Bausektor und in der Medizintechnik geeignet.

Die Schrift EP 0838496 offenbart eine thermoplastische Harzzusammensetzung, bestehend aus (1) 30 bis 95 Gewichtsprozent einer Matrixpolymerkomponente, bestehend aus 0 bis 95 Gew.-% mindestens eines nichtmodifizierten thermoplastischen Harzes, und 5 bis 100 Gew.-% mindestens eines chemisch modifizierten Produktes eines nichtmodifizierten thermoplastischen Harzes, wobei das nicht modifizierte thermoplastische Harz ausgewählt ist aus kristallinem Propylen-Homopolymer, kristallinem Propylen-Ethylen-Random-Copolymer und kristallinem Propylen-Ethylen-Block-Copolymer, und (2) 5 bis 70 Gew.-% einer dispersen Polymerkomponente aus Partikeln eines chemisch modifizierten und vernetzten 1,2-Polybutadien-Haarzes aus Partikeln eines chemisch modifizierten und vernetzten 1,2-Polybutadien-Harzes, die in der Matrixharzkomponente (1) feinverteilt sind.

Die US 6087431 lehrt eine olefinische thermoplastische Elastomer-Zusammensetzung, die aus einer Mischung besteht, die umfasst (1) 100 Gewichtsteile eines olefinischen Elastomers, bestehend aus Ethylen und mindestens einem α-Olefin, das 6 bis 12 Kohlenstoffatome aufweist und einer α-Olefin-Copolymerisationsgrad von 26 bis 30 Gew.%, eine Dichte von 0,8 bis 0,9 g/cm³ und eine Molmassenverteilung von (Mw/Mn) von weniger als 3,0 bei einem Verhältnis der gewichtsgemittelten Molmasse (Mw) zur zahlengemittelten Molmasse (Mn), errechnet aus der Gelpermeationschromatograhie (GPC), (2) 5 bis 90 Gewichtsteile eines Propylen-Polymers, und (3) 5 bis 250 Gewichtsteile eines Öls für Gummi, wobei die Mischung vernetzt wird durch einen Radikalinitiator oder mittels eines Radikalinitiators und eines Vernetzungsverstärkers, die vorteilhaft für Automobilbauteile, elektrische Bauteile oder Gegenstände des täglichen Bedarfs verwendet werden kann.

In der Schrift EP 0428153 wird ein dynamisch partiell vernetztes Elastomer beschrieben, bestehend aus (a) 10 bis 70 Gewichtsteilen eines Polypropylen-Polymermaterials, ausgewählt aus der Gruppe, die besteht aus (i) kristallinen Polypropylen mit einem Isotaktizitätsindex von größer 90% und (ii) einem Ethylen-Propylen-Random-Copolymer, das einen Ethylen-Gehalt von bis zu 5 % aufweist und zu 90 bis 94 % unlöslich bei Raumtemperatur ist, (b) 20 bis 60 Gewichtsteile eines amorphen Ethylen-Propylen-Copolymer-Kautschuks, der einen Ethylen-Gehalt von 40 bis 60 % aufweist, (c) 10 bis 30 Gewichtsteile eines semi-kristallinen, geringdichten, im Wesentlichen linearen Ethylen-Propolymers mit einem Ethylengehalt größer 90 %, das in Xylol bei Raumtemperatur unlöslich ist, wobei der Gesamtgehalt von (a) + (b) + (c) 100 Gewichtsteile beträgt und (d) einem Vernetzungssystem, basierend auf 100 Gewichtsteilen von (a) + (b) + (c), enthaltend (i) 3 bis 15 Gewichtsteile 1,2-Polybutadien mit einem Molekulargewicht von 1.300 bis 13.000 (ii) 0,5 bis 3 Gewichtsteile eines Peroxid-Vernetzers mit einer Halbwertszeit von 3,3 bis 20 min bei 160 °C in EPDM.

Allerdings weisen die herkömmlichen Produkte aus diesen Polymermaterialien Nachteile auf. Die Verträglichkeit der monomeren, unreagierten Coagenzien mit der Polymerzusammensetzung ist unzureichend. Durch Migration dieser niedermolekularen Stoffe an die Oberfläche kommt es zu Ausblühungen.

Außerdem ist die Schmutzanfälligkeit von Produkten, die aus herkömmlichen thermoplastischen Elastomeren sowie Mischungen der thermoplastischen Elastomere mit Polyolefinen hergestellt sind, vergleichsweise hoch. Ein weiteres Problem bei der Herstellung von Formteilen und Halbzeug aus herkömmlichen Polymerzusammensetzungen betrifft das Gleit- und Verarbeitungsverhalten.

Aufgabe der vorliegenden Erfindung ist es daher, eine vernetzbare Zusammensetzung zur Verfügung zu stellen, die zur Herstellung von Formteilen und Halbzeug, insbesondere von Dichtungs- und Möbelprofilen sowie Schläuchen, geeignet ist, und welche die vorstehend genannten Nachteile und Probleme überwindet.

Diese Aufgabe wird gelöst durch eine vernetzbare Zusammensetzung gemäss Anspruch 1.

Das thermoplastische Homo- oder Copolymer auf der Basis von Propylen (A) kann ein Polypropylen-Homopolymer oder ein Polypropylen-Copolymer, wie Polypropylen-Block-Copolymer, Polypropylen-Random-Copolymer, Polypropylen-Random-Block-Copolymer, Polypropylen-Random-Block-Copolymer mit integriertem LLDPE (linear low density polyethylene), Polypropylen-Reaktorblend mit Polystyrol oder Polymethacrylat, langkettenverzweigtes Polypropylen (beispielsweise entstanden durch Auslösung einer Radikalreaktion mittels Strahlung oder Peroxidinitiierung), polar modifziertes Polypropylen (beispielsweise entstanden durch Propfen von polaren Olefinen, wie z.B. Maleinsäureanhydrid, Ithaconsäureanhydrid oder (Meth)acrylsäure, mittels Peroxidinitiierung), und Polypropylen-Polyethylen-Copolymer sein. Weiterhin kann das thermoplastische Homo- oder Copolymer auf der Basis von Propylen ein Gemisch aus zwei oder mehreren der vorstehend genannten Polymere sein.

Das thermoplastische Homo- oder Copolymer auf der Basis von Propylen (A) kann bevorzugt ein Gemisch aus 50 bis 98% kristallinem Copolymeren mit mehr als 80% Propylen und weniger als 20% Ethylen und/oder einem α-Olefin mit mehr als 4 Kohlenstoffatomen und 2 bis 50% elastischen Copolymeren mit mehr als 20% Ethylen und weniger als 80% Propylen und/oder einem α-Olefin mit mehr als 4 Kohlenstoffatomen sein. Weiterhin kann das thermoplastische Homo- oder Copolymer auf der Basis von Propylen ein Gemisch eines oder mehrerer der vorstehend genannten Polymere mit einem Polyethylen-Homo- und/oder Copolymeren sein.

Das Copolymer und/oder Terpolymer aus Ethylen und α-Olefinen mit mehr als 3 Kohlenstoffatomen (B), kann ein Copolymer und/oder Terpolymer aus Ethylen und α-Olefinen sein, in dem das α-Olefin ein Alken, wie 1-Buten, 1-Hexen, 1-Octen ist. Weiterhin kann das α-Olefin mit mehr als 3 Kohlenstoffatomen ein Gemisch aus 1-Buten, 1-Hexen und/oder 1-Octen sein. Bevorzugte α-Olefine sind ausgewählt aus 1-Hexan und 1-Octen. Besonders bevorzugt ist ein Copolymer aus Ethylen und 1-Octen, mit mehr als 60 Gew.-% Ethylen und weniger als 40 Gew.-% 1-Octen.

Das Polybutadien (C) kann 1,2-Polybutadien oder ein Gemisch aus 1,2-Polybutadien und 1,4-Polybutadien sein. Das Polybutadien ist vorzugsweise ein Gemisch aus 1,2-Polybutadien und 1,4-Polybutadien mit einem Vinylgehalt von mehr als 50% und einem Molekulargewicht zwischen 1.000 und 12.000.

Weiterhin ist 1,2 Polybutadien mit einem Molekulargewicht von 5000.

Der Radikalbildner (D) kann ausgewählt sein aus der Gruppe, bestehend aus einer Azoverbindung, einer Peroxidverbindung und Gemischen davon. Die Azoverbindung kann jede geeignete Azoverbindung, wie beispielsweise 2,2'-Azodiisobutyronitril oder 2,2'-Azobis(2-acetoxypropan) sein. Die Peroxidverbindung kann ein Alkylperoxid, ein Acylperoxid, ein Ketonperoxid, ein Hydroperoxid, ein Peroxocarbonat, ein Perester, ein Peroxoketal oder ein Peroxooligomer sein. Vorzugsweise kann der Radikalbildner ein organisches Alkylperoxid sein, das eine Halbwertszeit von 0,1 Stunden bei Temperaturen von mehr als 80°C aufweist. Weiterhin bevorzugt kann der Radikalbildner ein organisches Alkylperoxid, wie 2,5-Dimethyl-2,5-di(tertbutylperoxo)hexan, 2,5-Dimethyl-2,5-di(tertbutylperoxo)-3-hexin, Di(tertbutyl)peroxid, 1,3-Di(tertbutylperoxoisopropyl)benzol, Dicumylperoxid oder Tertbutylcumylperoxid sein. Außerdem kann der Radikalbildner der erfindungsgemäßen Zusammensetzung ein Gemisch aus einer oder mehrerer der vorstehend genannten Peroxidverbindungen und/oder Azoverbindungen sein.

Weiterhin kann der Radikalbildner als solcher oder in einer auf einen Träger, wie beispielsweise auf Kreide aufgebrachten Form verwendet werden.

Die erfindungsgemäße Zusammensetzung enthält 100 Gewichtsteile eines thermoplastischen Homo- oder Copolymers auf der Basis von Propylen (A). Weiterhin enthält sie 10 bis 200 Gewichtsteile, bevorzugt 50 bis 150 Gewichtsteile, eines Copolymers und/oder Terpolymers aus Ethylen und α-Olefinen mit mehr als 3 Kohlenstoffatomen (B). Außerdem enthält sie 0,5 bis 50 Gewichtsteile bevorzugt 1 bis 10 Gewichtsteile, Polybutadien. Außerdem enthält sie 1 bis 10 Gewichtsteile, bevorzugt 0,5 bis 1,0 Gewichtsteile eines Radikalbildners (D).

Die erfindungsgemäße Zusammensetzung kann bis zu 200 Gewichtsteile Zusätze umfassen, wobei bis zu 5 Gewichtsteile Gleit- oder Verarbeitungsmittel, bis zu 2 Gewichtsteile Nukleierungsmittel, bis zu 1 Gewichtsteil Stabilisatoren, bis zu 2 Gewichtsteile Antistatika, bis zu 100 Gewichtsteile Flammschutzmittel, bis zu 100 Gewichtsteile Füll- und/oder Verstärkungsstoffe, bis zu 100 Gewichtsteile Prozeßöle, bis zu 5 Gewichtsteile Pigmente und/oder bis zu 3 Gewichtsteile Treibmittel anwesend sein können. Die Gewichtsteile sind jeweils auf die Gewichtssumme der Komponenten (A), (B), (C) und (D) bezogen.

Die erfindungsgemäße Zusammensetzung kann vernetzt werden, um eine vernetzte Zusammensetzung, die geeignet zur Herstellung von Formteilen oder Halbzeug ist, zu erhalten. Das Vernetzen erfolgt bevorzugt in bekannter Weise durch Mischen und Erwärmen der einzelnen Komponenten vorzugsweise unter der Einwirkung von Scherkräften.

Zur Herstellung von Formteilen oder Halbzeug, umfassend die vernetzte erfindungsgemäße Zusammensetzung, können Extrusions- und/oder Spritzgußverfahren verwendet werden. Insbesondere kann die erfindungsgemäße Zusammensetzung gemischt und vernetzt und sodann durch Extrudieren oder Spritzgießen zum entsprechenden Halbzeug oder Formteil geformt werden. Halbzeug und Formteile, welche eine vernetzte erfindungsgemäße Zusammensetzung umfassen, sind beispielsweise Profile, wie Dichtungsprofile und Möbelprofile, und Schläuche. Bevorzugt sind Dichtungsprofile, Dichtungsrahmen und Dichtungsringe für Haushaltsgeräte.

Durch Verwendung der erfindungsgemäßen Zusammensetzung sind vernetzte Zusammensetzungen zugänglich, welche keine Ausblüh- oder Ausschwitzungserscheinungen aufweisen. Außerdem haben die vernetzten erfindungsgemäßen Zusammensetzungen eine geringe Schmutzanfälligkeit sowie exzellente Gleit- und Verarbeitungseigenschaften.

In den folgenden Beispielen wird die vorliegende Erfindung verdeutlicht. Die Zusammensetzungen sind in Gewichtsteilen (T) der einzelnen Komponenten angegeben und betragen in den folgenden Beispielen 1-5:

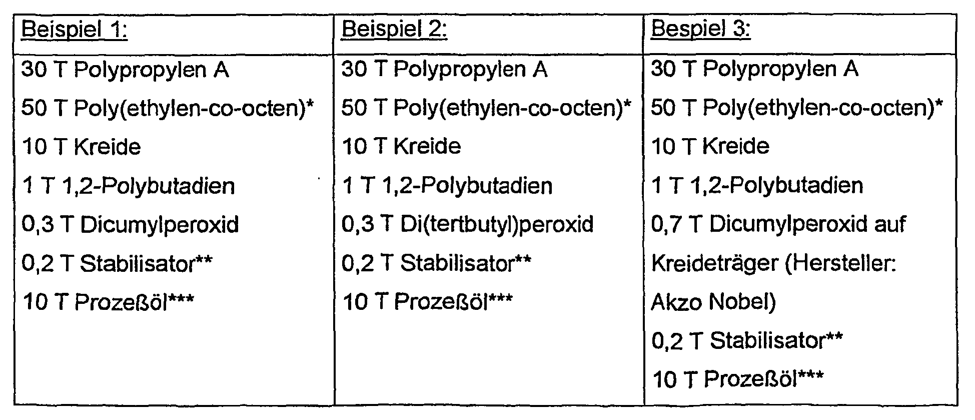

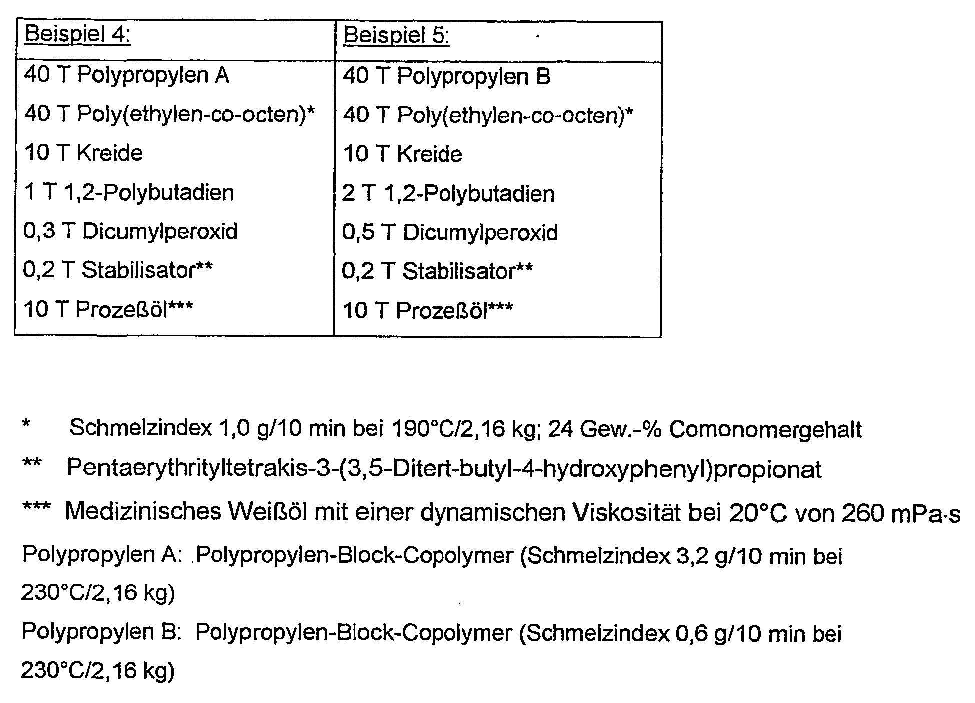

Zur Durchführung der nachstehenden Beispiele 1 bis 5 wurde ein herkömmlicher Doppelschneckenextruder mit Dosiereinrichtung für flüssige Medien und Vakuumentgasung verwendet, und mit gleichläufigen Schnecken und zwischen 160°C und 200°C betrieben.

### Beispiel 1

In einem Doppelschneckenextruder mit Dosiereinrichtung für flüssige Medien und Vakuumentgasung werden Polypropylen A und Poly(ethen-co-octen) dosiert. Die Mischung wird aufgeschmolzen und in den Extruder a) eine Mischung aus Prozeßöl und Dicumylperoxid über die Membranpumpe und b) eine Mischung aus Kreide, Stabilisator und 1,2-Polybutadien (Molekulargewicht 5000) über die Pulverwaage dosiert. Die resultierende vernetzte Zusammensetzung hat die in der Tabelle angegebenen Eigenschaften.

### Beispiel 2

In einem Doppelschneckenextruder mit Dosiereinrichtung für flüssige Medien und Vakuumentgasung werden Polypropylen A und Poly(ethen-co-octen) dosiert. Die Mischung wird aufgeschmolzen und in den Extruder a) eine Mischung aus Prozeßöl und Di-(tertbutyl)peroxid über die Membranpumpe und b) eine Mischung aus Kreide, Stabilisator und 1,2-Polybutadien (Molekulargewicht 5000) über die Pulverwaage dosiert. Die resultierende vernetzte Zusammensetzung hat die in der Tabelle angegebenen Eigenschaften.

### Beispiel 3

In einem Doppelschneckenextruder mit Dosiereinrichtung für flüssige Medien und Vakuumentgasung werden Polypropylen A und Poly(ethen-co-octen) dosiert. Die Mischung wird aufgeschmolzen und in den Extruder a) Prozeßöl über die Membranpumpe und b) eine Mischung aus Kreide, Stabilisator, 1,2-Polybutadien (Molekulargewicht 5000) und Dicumylperoxid auf Kreideträger, erhältlich von Akzo Nobel, über die Pulverwaage dosiert. Die resultierende vernetzte Zusammensetzung hat die in der Tabelle angegebenen Eigenschaften.

### Beispiel 4

In einem Doppelschneckenextruder mit Dosiereinrichtung für flüssige Medien und Vakuumentgasung werden Polypropylen A und Poly(ethen-co-octen) dosiert. Die Mischung wird aufgeschmolzen und in den Extruder a) eine Mischung aus Prozeßöl und Dicumylperoxid über die Membranpumpe und b) eine Mischung aus Kreide, Stabilisator und 1,2-Polybutadien (Molekulargewicht 5000) über die Pulverwaage dosiert. Die resultierende vernetzte Zusammensetzung hat die in der Tabelle angegebenen Eigenschaften.

### Beispiel 5

In einem Doppelschneckenextruder mit Dosiereinrichtung für flüssige Medien und Vakuumentgasung werden Polypropylen B und Poly(ethen-co-octen) dosiert. Die Mischung wird aufgeschmolzen und in den Extruder a) eine Mischung aus Prozeßöl und Dicumylperoxid über die Membranpumpe und b) eine Mischung aus Kreide, Stabilisator und 1,2-Polybutadien (Molekulargewicht 5000) über die Pulverwaage dosiert. Die resultierende vernetzte Zusammensetzung hat die in der Tabelle angegebenen Eigenschaften.

**Tabelle**

| | | | | | |
|---|---|---|---|---|---|
| Mechanische Eigenschaften der vernetzten Zusammensetzungen mit Reißfestigkeit nach ISO 527 [N/mm²]; Reißdehnung nach ISO 527 [%]; Weiterreißfestigkeit nach DIN 53507 [N/mm]; Druckverformungsrest (DVR) 24h bei 55°C nach DIN 53517 [%]; Shore-Härte A (Shore A) nach DIN 53505. | | | | | |

| **Eigenschaft** | **Beispiel 1** | **Beispiel 2** | **Beispiel 3** | **Beispiel 4** | **Beispiel 5** |
|---|---|---|---|---|---|
| Reißfestigkeit | 10,5 | 9,5 | 10,0 | 12,7 | 5,7 |
| Reißdehnung | 473,4 | 519,7 | 450,3 | 467,4 | 510,4 |
| Weiterreißfestigkeit | 16,9 | 14,6 | 15,4 | 27,5 | 11,1 |
| DVR | 62,5 | 60,0 | 63,4 | 68,7 | 55,0 |
| Shore A | 80 | 78 | 81 | 85 | 60 |

Die beispielgemäßen vernetzten Zusammensetzungen, sind hervorragend zum Herstellen von erfindungsgemäßem Halbzeug und erfindungsgemäßen Formteilen geeignet.

## Patentansprüche

1. Vernetzbare Zusammensetzung, umfassend
(A) ein thermoplastisches Homo- oder Copolymer auf der Basis von Propylen,
(B) ein Copolymer und/oder Terpolymer aus Ethylen und α-Olefinen mit mehr als 3 Kohlenstoffatomen,
(C) Polybutadien, und
(D) einen Radikalbildner,
**dadurch gekennzeichnet, dass**
(A) zu 100 Gewichtsteilen,
(B) zwischen 10 und 200 Gewichtsteilen,
(C) zwischen 0.5 und 50 Gewichtsteilen, und
(D) zwischen 0.1 und 10 Gewichtsteilen in der Zusammensetzung enthalten ist,
und das Polybutadien (C) ein 1,2-Polybutadien mit einem Molekulargewicht von 5000 ist, und der Druckverformungsrest (DVR) eines Normkörpers aus der vernetzten Zusammensetzung nach 24 h bei 55 °C gemäß DIN 53517 mehr als 55 % beträgt und die Shore-Härte A (Shore A) gemäß DIN 53505 zwischen 60 und 85 beträgt.

2. Zusammensetzung nach Anspruch 1, wobei Komponente (A) ausgewählt ist aus der Gruppe bestehend aus Polypropylen-Homopolymer, Polypropylen-Block-Copolymer, Polypropylen-Random-Copolymer, Polypropylen-Random-Block-Copolymer, Polypropylen-Random-Block-Copolymer mit integriertem LLDPE, Polypropylen-Reaktorblend mit Polystyrol oder Polymethylmethacrylat, langkettenverzweigtem Polypropylen, polar modifiziertem Polypropylen, Polypropylen-Polyethylen-Copolymer und Gemischen davon.

3. Zusammensetzung nach Anspruch 1, wobei Komponente (A) ein Gemisch aus 50 - 98 % kristallinem Copolymeren mit mehr als 80 % Propylen und weniger als 20 % Ethylen und/oder einem α-Olefin mit mehr als 4 Kohlenstoffatomen und 2 - 50 % elastischen Copolymeren mit mehr als 20 % Ethylen und weniger als 80 % Propylen und/oder einem α-Olefin mit mehr als 4 Kohlenstoffatomen ist.

4. Zusammensetzung nach einem der Ansprüche 1 bis 3, wobei das α-Olefin mit mehr als 3 Kohlenstoffatomen in Komponente (B) ausgewählt ist aus der Gruppe bestehend aus 1-Buten, 1-Hexen, 1-Octen und Gemischen davon.

5. Zusammensetzung nach einem der Ansprüche 1 bis 4, wobei Komponente (C) ausgewählt ist ein Gemisch von 1,2-Polybutadien und 1,4-Polybutadien.

6. Zusammensetzung nach Anspruch 5, wobei Komponente (C) ein Gemisch aus 1,2-Polybutadien und 1,4-Polybutadien mit einem Vinylgehalt von mehr als 50 % und einem Molekulargewicht zwischen 1.000 und 12.000 ist.

7. Zusammensetzung nach einem der Ansprüche 1 bis 6, wobei Komponente (D) ausgewählt ist aus der Gruppe, bestehend aus einer Azoverbindung, einer Peroxidverbindung und Gemischen davon.

8. Zusammensetzung nach Anspruch 7, wobei Komponente (D) ausgewählt ist aus der Gruppe, bestehend aus Alkylperoxid, Acylperoxid, Ketonperoxid, Hydroperoxid, Peroxocarbonat, Perester, Peroxoketal, Peroxooligomer und Gemischen davon.

9. Zusammensetzung nach Anspruch 7, wobei Komponente (D) ein organisches Alkylperoxid ist, das eine Halbwertzeit von 0,1 Stunden bei Temperaturen von mehr als 80 °C aufweist.

10. **Formteile aus der vernetzten Zusammensetzung gemäß einem der Ansprüche 1 bis 9.**

11. **Halbzeug aus der vernetzten Zusammensetzung gemäß einem der Ansprüche 1 bis 9.**

12. Halbzeug nach Anspruch 11 in Form von Profilen, wie Dichtungsprofilen und Möbelprofilen, oder Schläuchen.

13. Verwendung einer vernetzten Zusammensetzung nach einem der Ansprüche 1 bis 9 zur Herstellung von Formteilen oder Halbzeug.

## Claims

1. Crosslinkable composition, encompassing
(A) a thermoplastic homo- or copolymer based on propylene,
(B) a copolymer and/or terpolymer composed of ethylene and of α-olefins having more than 3 carbon atoms,
(C) polybutadiene, and
(D) a free-radical generator,
**characterized in that**
(A) 100 parts by weight,
(B) from 10 to 200 parts by weight,
(C) from 0.5 to 50 parts by weight, and
(D) from 0.1 to 10 parts by weight are present in the composition, and the polybutadiene (C) is a 1,2-polybutadiene with a molecular weight of 5000, and the compression set (CS) of a standard specimen composed of the crosslinked composition after 24 h at 55°C to DIN 53517 is more than 55% and the Shore A hardness to DIN 53505 is from 60 to 85.

2. Composition according to Claim 1, where component (A) has been selected from the group consisting of polypropylene homopolymer, polypropylene block copolymer, polypropylene random copolymer, polypropylene random block copolymer, polypropylene random block copolymer with integrated LLDPE, polypropylene reactor blend with polystyrene or polymethyl methacrylate, long-chain-branched polypropylene, polar-modified polypropylene, polypropylene-polyethylene copolymer and mixtures thereof.

3. Composition according to Claim 1, where component (A) is a mixture composed of from 50 to 98% of crystalline copolymer having more than 80% of propylene and less than 20% of ethylene and/or an α-olefin having more than 4 carbon atoms, and from 2 to 50% of elastic copolymers having more than 20% of ethylene and less than 80% of propylene and/or an α-olefin having more than 4 carbon atoms.

4. Composition according to any of Claims 1 to 3, where the α-olefin having more than 3 carbon atoms in component (B) has been selected from the group consisting of 1-butene, 1-hexene, 1-octene and mixtures thereof.

5. Composition according to any of Claims 1 to 4, where component (C) is a mixture of 1,2-polybutadiene and 1,4-polybutadiene.

6. Composition according to Claim 5, where component (C) is a mixture composed of 1,2-polybutadiene and 1,4-polybutadiene having more than 50% vinyl content and a molecular weight of from 1000 to 12 000.

7. Composition according to any of Claims 1 to 6, where component (D) has been selected from the group consisting of an azo compound, a peroxide compound and mixtures thereof.

8. Composition according to Claim 7, where component (D) has been selected from the group consisting of alkyl peroxide, acyl peroxide, ketone peroxide, hydroperoxide, peroxocarbonate, perester, peroxoketal, peroxooligomer and mixtures thereof.

9. Composition according to Claim 7, where component (D) is an organic alkyl peroxide which has a half-life time of 0.1 hour at temperatures of more than 80°C.

10. Mouldings composed of the crosslinked composition according to any of Claims 1 to 9.

11. Semifinished product composed of the crosslinked composition according to any of Claims 1 to 9.

12. Semifinished product according to Claim 11 in the form of profiles, such as gasket profiles and furniture profiles, or of flexible tubing.

13. Use of a crosslinked composition according to any of Claims 1 to 9 for the production of mouldings or of a semifinished product.

## Revendications

1. Composition réticulable, comprenant
(A) un homopolymère ou un copolymère thermoplastique à base de propylène,
(B) un copolymère et/ou un terpolymère d'éthylène et d'α-oléfines comprenant plus de 3 atomes de carbone,
(C) du polybutadiène et
(D) un agent de formation de radicaux,
**caractérisée en ce que**
(A) est contenu à raison de 100 parties en poids
(B) est contenu entre 10 et 200 parties en poids
(C) est contenu entre 0,5 et 50 parties en poids, et
(D) est contenu entre 0,1 et 10 parties en poids dans la composition, et le polybutadiène (C) est un 1,2-polybutadiène présentant un poids moléculaire de 5000, et la déformation résiduelle sous compression (DRC) d'une éprouvette normalisée constituée par la composition réticulée après 24 h à 55°C selon la norme DIN 53517 est supérieure à 55% et la dureté Shore A (Shore A) selon la norme DIN 53505 est comprise entre 60 et 85.

2. Composition selon la revendication 1, où le composant (A) est choisi dans le groupe constitué par un homopolymère de polypropylène, un copolymère à blocs de polypropylène, un copolymère statistique de polypropylène, un copolymère statistique à blocs de polypropylène, un copolymère statistique à blocs de polypropylène avec du LLDPE intégré, un mélange réactif de polypropylène avec du polystyrène ou du poly(méthacrylate de méthyle), un polypropylène à longue chaîne ramifiée, un polypropylène modifié de manière polaire, un copolymère de polypropylène-polyéthylène et leurs mélanges.

3. Composition selon la revendication 1, où le composant (A) est un mélange de 50 - 98% de copolymères cristallins, comprenant plus de 80% de propylène et moins de 20% d'éthylène et/ou d'une α-oléfine comprenant plus de 4 atomes de carbone, et de 2-50% de copolymères élastiques, comprenant plus de 20% d'éthylène et moins de 80% de propylène et/ou d'une α-oléfine comprenant plus de 4 atomes de carbone.

4. Composition selon l'une quelconque des revendications 1 à 3, où l'α-oléfine comprenant plus de 3 atomes de carbone dans le composant (B) est choisie dans le groupe constitué par le 1-butène, le 1-hexène, le 1-octène et leurs mélanges.

5. Composition selon l'une quelconque des revendications 1 à 4, où le composant (C) est un mélange de 1,2-polybutadiène et de 1,4-polybutadiène.

6. Composition selon la revendication 5, où le composant (C) est un mélange de 1,2-polybutadiène et de 1,4-polybutadiène présentant une teneur en vinyle de plus de 50% et un poids moléculaire entre 1000 et 12 000.

7. Composition selon l'une quelconque des revendications 1 à 6, où le composant (D) est choisi dans le groupe constitué par un composé azo, un composé peroxyde et leurs mélanges.

8. Composition selon la revendication 7, où le composant (D) est choisi dans le groupe constitué par un peroxyde d'alkyle, un peroxyde d'acyle, un peroxyde de cétone, un hydroperoxyde, un peroxocarbonate, un perester, un peroxocétal, un peroxooligomère et leurs mélanges.

9. Composition selon la revendication 7, où le composant (D) est un peroxyde d'alkyle organique, qui présente une durée de demi-vie de 0,1 heure à des températures de plus de 80°C.

10. Pièces façonnées constituées par la composition réticulée selon l'une quelconque des revendications 1 à 9.

11. Produit semi-fini constitué par la composition réticulée selon l'une quelconque des revendications 1 à 9.

12. Produit semi-fini selon la revendication 11 sous forme de profilés, tels que des profilés d'étanchéité et de meubles, ou sous forme de tuyaux flexibles.

13. Utilisation d'une composition réticulée selon l'une quelconque des revendications 1 à 9 pour la production de pièces façonnées ou d'un produit semi-fini.
